# EUROPEAN PATENT APPLICATION

(11) **EP 4 850 787 A1**
(43) Date of publication of application: **09.12.2026**
(21) Application number: 26176435.1
(22) Date of filing: 05.05.2026
(51) Int. Cl.: B01D 53/04, F28D 21/00

(54) **GAS CAPTURE SYSTEM**

(30) Priority: 28.05.2025 US 202519221412
(71) Applicant: GE Vernova Technology GmbH, 5400 Baden (CH)
(72) Inventor: SNIDER, Zachary John, Greenville, 29615 (US); JONES, Jeffrey Clarence, Greenville, 29615 (US)
(74) Representative: Openshaw & Co.

(57) **Abstract**

A system includes a sorbent-based gas capture system configured to capture an undesirable gas from a gas flow. The sorbent-based gas capture system includes one or more adsorbers. The one or more adsorbers include a heat exchanger. The heat exchanger includes a plurality of fluid passages extending through the heat exchanger. The plurality of fluid passages is configured to receive a fluid flow. The heat exchanger also includes a plurality of gas passages extending through the heat exchanger. The plurality of gas passages is configured to receive the gas flow having the undesirable gas during an adsorption stage. The heat exchanger also includes a sorbent material disposed on one or more surfaces of the plurality of gas passages. The sorbent material is configured to remove the undesirable gas from the gas flow during the adsorption stage.

## Description

### BACKGROUND

The subject matter disclosed herein generally relates to a gas capture system.

Gas capture systems are frequently used for removing undesirable gases from an exhaust gas and/or the ambient air. Sorbent-based gas capture systems utilize sorbent material to adsorb the undesirable gases. A vacuum and heat may be used to remove the undesirable gases from the sorbent material. However, the formation of a vacuum often requires large and inefficient vacuum chambers. As such, there is a need for efficient and effective gas capture systems to remove undesirable gases from the atmosphere and/or from exhaust gases discharged into the atmosphere.

### BRIEF DESCRIPTION

Certain embodiments commensurate in scope with the originally claimed subject matter are summarized below. These embodiments are not intended to limit the scope of the claimed embodiments, but rather these embodiments are intended only to provide a brief summary of possible forms of the subject matter. Indeed, the presently claimed embodiments may encompass a variety of forms that may be similar to or different from the embodiments set forth below.

In certain embodiments, a system includes a sorbent-based gas capture system configured to capture an undesirable gas from a gas flow. The sorbent-based gas capture system includes one or more adsorbers. The one or more adsorbers include a heat exchanger. The heat exchanger includes a plurality of fluid passages extending through the heat exchanger. The plurality of fluid passages is configured to receive a fluid flow. The heat exchanger also includes a plurality of gas passages extending through the heat exchanger. The plurality of gas passages is configured to receive the gas flow having the undesirable gas during an adsorption stage. The heat exchanger also includes a sorbent material disposed on one or more surfaces of the plurality of gas passages. The sorbent material is configured to remove the undesirable gas from the gas flow during the adsorption stage. The one or more adsorbers also include an outer shell disposed about the heat exchanger. The one or more adsorbers also include a fluid chamber disposed about the heat exchanger between the heat exchanger and the outer shell. The plurality of fluid passages is coupled to the fluid chamber.

In certain embodiments, a system includes a heat exchanger of an adsorber of a sorbent-based gas capture system configured to capture an undesirable gas from a gas flow. The heat exchanger includes a one-piece body. The heat exchanger also includes a plurality of fluid passages extending through the one-piece body. The plurality of fluid passages is configured to receive a fluid flow. The heat exchanger also includes a plurality of gas passages extending through the one-piece body. The plurality of gas passages is configured to receive a gas flow comprising an undesirable gas during an adsorption stage. The heat exchanger also includes a sorbent material disposed on one or more surfaces of the plurality of gas passages. The sorbent material is configured to remove the undesirable gas from the gas flow during the adsorption stage.

In certain embodiments, a method includes extruding a one-piece body of a heat exchanger for a sorbent-based gas capture system. The heat exchanger includes a plurality of fluid passages extending through the one-piece body and a plurality of gas passages extending through the one-piece body. The method also includes applying a sorbent material to one or more surfaces of the plurality of gas passages. The method also includes forming a plurality of openings into an outer wall of the one-piece body. The plurality of openings includes one or more fluid inlets and one or more fluid outlets fluidly coupled to the plurality of fluid passages.

### BRIEF DESCRIPTION OF THE DRAWINGS

These and other features, aspects, and advantages of the presently disclosed techniques will become better understood when the following detailed description is read with reference to the accompanying drawings in which like characters represent like parts throughout the drawings, wherein:
FIG. 1 is a block diagram of an embodiment of a gas treatment system having one or more gas capture systems configured to capture an undesirable gas from an exhaust gas and/or air, in accordance with embodiments described herein;
FIG. 2 is a block diagram of an embodiment of the gas capture system of FIG. 1, further illustrating a plurality of adsorbers operating in an adsorption stage, a desorption stage, and a cooling stage, in accordance with embodiments described herein;
FIG. 3 is a perspective view of an embodiment of the gas capture system of FIGS. 1 and 2, illustrating internal contactor components and flow paths viewed from an open end in accordance with embodiments described herein;
FIG. 4 is a perspective view of an embodiment of the gas capture system of FIG. 3, further illustrating an end plate coupled to the open end, in accordance with embodiments described herein;
FIG. 5 is a cross-sectional view of an embodiment of the gas capture system of FIGS. 3 and 4, further illustrating details of the internal contactor components and flow paths, in accordance with embodiments described herein; and
FIG. 6 is a close-up view of an area 6-6 in FIG. 3, further illustrating internal contactor components and flow paths, in accordance with embodiments described herein.

### DETAILED DESCRIPTION

One or more specific embodiments of the presently disclosed systems and methods are described below. In an effort to provide a concise description of these embodiments, all features of an actual implementation may not be described in the specification. It should be appreciated that in the development of any such actual implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

When introducing elements of various embodiments of the presently disclosed embodiments, the articles "a," "an," "the," and "said" are intended to mean that there are one or more of the elements. The terms "comprising," "including," and "having" are intended to be inclusive and mean that there may be additional elements other than the listed elements.

The present disclosure is generally directed towards a gas capture system that includes a heat exchanger (e.g., heat exchanger cartridge) disposed in an outer shell (e.g., water jacket). The heat exchanger includes a plurality of fluid passages configured to transport a liquid and a plurality of gas passages configured to transport a gas (e.g., air and/or exhaust gas) for treatment. The plurality of fluid passages are oriented crosswise relative to the plurality of gas passages. The plurality of fluid passages alternate with the plurality of gas passages, such that the liquid flowing through the plurality of fluid passages is placed in a heat exchange relationship with the gas (e.g., air and/or exhaust gas) flowing through the plurality of gas passages. One or more surfaces of the plurality of gas passages may be coated with a sorbent material (e.g., sorbent coating) configured to remove one or more undesirable gases from the air and/or exhaust gas. It may be appreciated that the plurality of gas passages may retain a vacuum, thereby eliminating the need for a dedicated vacuum chamber. In particular, the gas passages retain a vacuum (e.g., vacuum pressure) internally within the heat exchanger, rather than surrounding the heat exchanger with a large vessel forming a vacuum chamber.

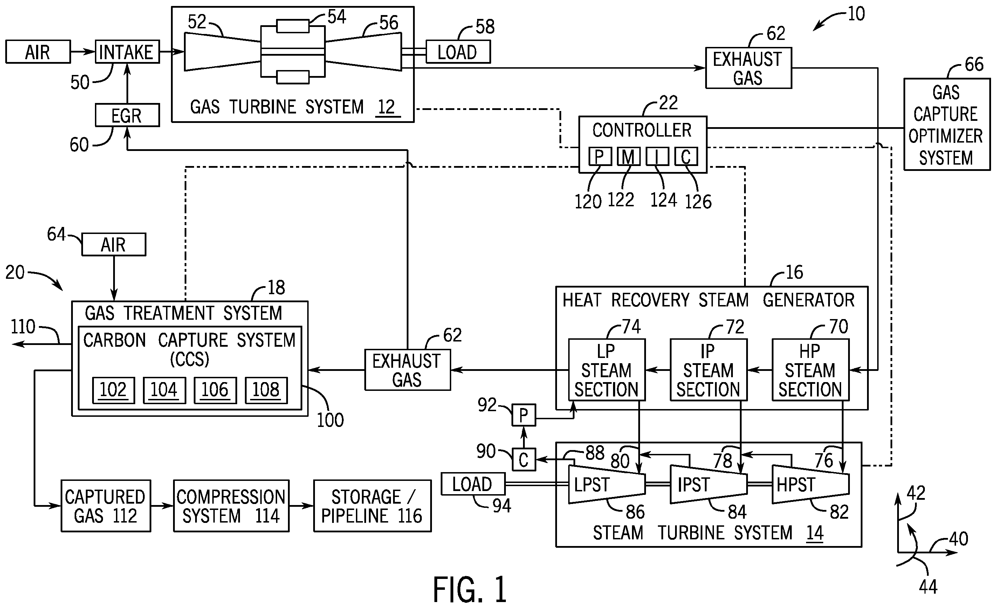

With the foregoing in mind, FIG. 1 is a block diagram of an embodiment of an industrial plant 10 having a gas turbine system 12, a steam turbine system 14, a heat recovery steam generator (HRSG) 16, a gas treatment system 18 having one or more gas capture systems 20, and a controller 22 coupled to each of the systems 12, 14, 16, and 18. As discussed below, the one or more gas capture systems 20 of the gas treatment system 18 are configured to capture an undesirable gas (e.g., CO₂) from exhaust gas (e.g., post combustion chamber) and/or air (e.g., direct air capture). As discussed in detail below, the gas treatment system 18 of the industrial plant 10 includes a carbon capture system 100 for use in removing undesirable gases (e.g., CO₂) from the exhaust gas of the combustion systems, captured air from the atmosphere, or a combination thereof. It should be noted that the gas capture system 20 (e.g., carbon capture system 100) may not be necessarily coupled to the gas treatment system 18. In certain embodiments, the carbon capture system 100 may be independent or separate from the industrial plant 10, such as a standalone carbon capture system 100 used for direct air capture. Furthermore, the carbon capture system 100 also includes a heating source and a cooling source. Before discussing details of the gas treatment system 18, various aspects of the industrial plant 10 are discussed in further detail. For purposes of orientation in the drawings, reference may be made to an axial direction or axis 40, a radial direction or axis 42 extending radially away from the axial direction or axis 40, and a circumferential direction or axis 44 extending circumferentially around the axial direction or axis 40. For example, the directions or axes 40, 42, and 44 may be in reference to the gas capture systems 20.

The gas turbine system 12 includes an air intake 50, a compressor 52 having one or more compressor stages, one or more combustors 54, a turbine 56 having one or more turbine stages, and a load 58 (e.g., electrical generator) driven by the turbine 56. In certain embodiments, the gas turbine system 12 further includes an exhaust gas recirculation (EGR) system 60 configured to recirculate an exhaust gas 62 into the air intake 50. The recirculated exhaust gas 62 helps to reduce the temperature and formation of certain emissions (e.g., nitrogen oxides (NOx)) associated with combustion in the combustors 54. In operation, the compressor 52 receives air (and also exhaust gas 62 if the EGR system 60 is active) from the air intake 50, and compresses the air 64 and/or exhaust gas 62 in one or more compressor stages (e.g., stages of rotating compressor blades). The combustors 54 then combust fuel from a fuel supply system with the compressed air and/or exhaust gas, and generate hot combustion gases. The hot combustion gases expand and drive one or more turbine stages (e.g., stages of rotating turbine blades) in the turbine 56, thereby driving rotation of the compressor 52 and the load 58 via shafts. The turbine 56 then outputs the hot combustion gases as the exhaust gas 62. The gas turbine system 12 may include a variety of piping to support the flow of intake air, compressed air (e.g., bleed air), one or more fuels (e.g., liquid fuel, gas fuel, etc.), additives for combustion, exhaust gas (e.g., exhaust gas recirculation), or other fluids.

The HRSG 16 recovers waste heat from the exhaust gas 62 to generate steam for driving the steam turbine system 14. The HRSG 16 includes a high-pressure (HP) steam section 70, an intermediate-steam (IP) section 72, and a low-pressure (LP) steam section 74 configured to generate HP steam 76, IP steam 78, and LP steam 80. The steam turbine system 14 may include an HP steam turbine 82 driven by the HP steam 76, an IP steam turbine 84 driven by the IP steam 78, and a LP steam turbine 86 driven by the LP steam 80. In addition to the steam provided by the HRSG 16, the HP steam turbine 82 provides IP steam to the IP steam turbine 84, and the IP steam turbine 84 provides LP steam to the LP steam turbine 86. The LP steam turbine 86 then outputs any remaining steam/water to a condensate line 88 coupled to the LP steam section 74 of the HRSG 16. The condensate line 88 may include a condenser 90 configured to condense any remaining steam to form a condensate, and a pump 92 configured to pump the condensate back to the LP steam section 74. In operation, the steam turbine system 14 drives a load 94 (e.g., electrical generator) via a shaft. In certain embodiments, the steam turbine system 14 and/or the HRSG 16 may provide heated water and/or steam (e.g., HP steam 76, IP steam 78, and/or LP steam 80) to the gas treatment system 18 to support a desorption mode of the one or more gas capture systems 20. For example, the gas capture systems 20 may receive heated water and/or steam in a temperature range of 100 to 150 degrees Celsius, 110 to 150 degrees Celsius, 120 to 150 degrees Celsius, or 130 to 150 degrees Celsius. The steam turbine system 14 and the HRSG 16 may include a variety of piping to support the flow of exhaust gas, steam, water, or other fluids, thereby facilitating waste heat recovery, steam generation, and steam power.

After the HRSG 16, the exhaust gas 62 may flow to the EGR system 60 and/or the gas treatment system 18. In the illustrated embodiment, the exhaust gas 62 flows through one or more gas capture systems 20 configured to capture undesirable gases. In some embodiments, the gas capture systems 20 may receive air 64 from an additional source (e.g., environment, fans, and the like). For example, the air 64 may be atmospheric air when the gas capture system 20 is configured as a direct air capture system. The undesirable gases from the exhaust gas 62 and/or the air 64 may include carbon oxides (CO_{X}) (e.g., carbon dioxide (CO₂) and carbon monoxide (CO)), nitrogen oxides (NO_{X}) (e.g., nitrogen dioxide (NO₂)), sulfur oxides (SO_{X}) (e.g., sulfur dioxide (SO₂)), or any combination thereof. In the following discussion, CO₂ may be used as an example of the undesirable gases; however, the gas capture systems 20 may be designed to capture any of the foregoing undesirable gases. For example, the gas capture systems 20 include one or more carbon capture systems 100 (e.g., CO₂ capture systems).

In some embodiments, the gas capture systems 20 (e.g., carbon capture systems 100) may include sorbent-based gas capture systems, solvent-based gas capture systems, cryogenic gas capture systems, or any combination thereof, configured to remove and capture undesirable gases. The carbon capture system 100 may include components 102, 104, 106, and 108 configured to enable gas capture of undesirable gases (e.g., CO₂) from the exhaust gas 62, thereby outputting a treated gas 110 and a captured gas 112 (e.g., CO₂). The treated gas 110 may be substantially free of the undesirable gases (e.g., CO₂) and may be discharged through an exhaust stack. The captured gas 112 (e.g., CO₂) may be compressed by a compression system 114 and stored and/or transported by a storage and/or pipeline system 116 for sequestration or other use such as, for example, greenhouses, beverage, chemical, concrete or fuel production. For example, the carbon capture systems 100 may include a post combustion capture (PCC) system that captures undesirable gases from the exhaust gas 62 and/or a direct air capture (DAC) system that captures undesirable gases from the air 64.

In certain embodiments, the carbon capture system 100 is a sorbent-based carbon capture system, and the components 102, 104, 106, and/or 108 include multiple sorbent-based carbon capture units (e.g., contactors or adsorbers having a sorbent material). In certain embodiments, the sorbent material may include porous, solid-phase materials, including mesoporous silicas, zeolites (e.g., aluminosilicates), and metal-organic frameworks (MOFs) and covalent organic frameworks (COFs). In certain embodiments, the carbon capture system 100 is a solvent-based carbon capture system, and the components 102, 104, 106, and/or 108 include one or more absorbers, strippers, and associated equipment. The carbon capture system 100 may include a variety of systems to support transitions between cycles of absorption, desorption, cooling, and the like, thereby facilitating carbon capture.

In the illustrated embodiment, the controller 22 is configured to control all aspects of the industrial plant 10. The controller 22 includes one or more processors 120, memory 122, instructions 124 stored on the memory 122 and executable by the processor 120, and communication circuitry 126 configured to communicate with sensors and various equipment of the industrial plant 10. For example, the controller 22 is configured to receive sensor feedback from one or more sensors 128 coupled to the gas turbine system 12, the steam turbine system 14, the HRSG 16, and the gas treatment system 18 (e.g., gas capture systems 20), and/or additional components of the industrial plant 10 and control the same equipment based on the sensor feedback, operating modes, user input, computer models, or any combination thereof. The sensors 128 may include temperature sensors, pressure sensors, flow rate sensors, gas composition sensors, or any combination thereof.

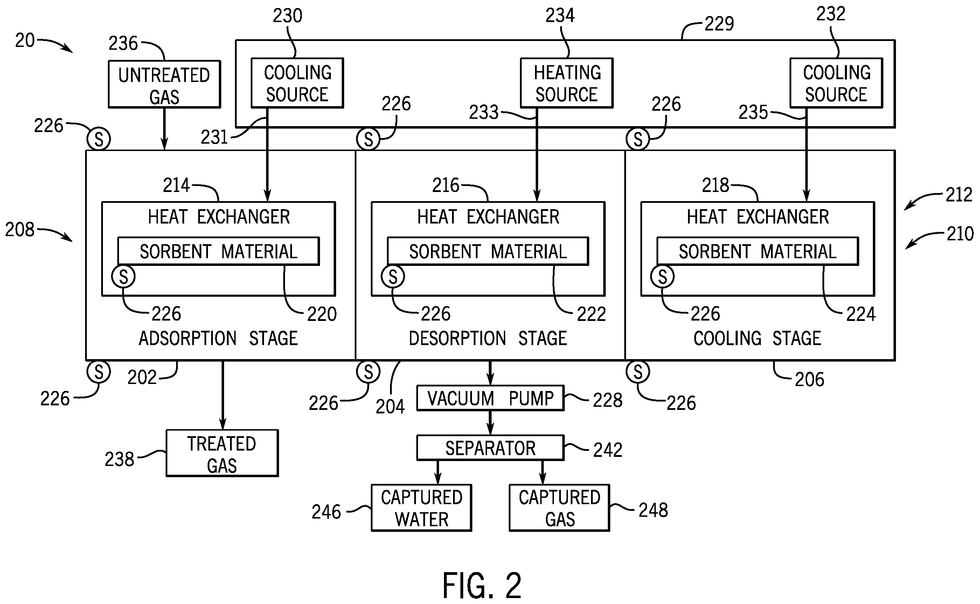

In certain embodiments, the controller 22 is configured to control operation of the gas capture systems 20 (e.g., carbon capture systems 100), such by controlling modes of operation (e.g., adsorption mode, desorption mode, and cooling mode), controlling heat sources for supplying heated fluid (e.g., steam) to the gas capture systems 20, controlling cooling sources for supply cooled fluids to the gas capture systems 20, vacuum pumps, or any combination thereof. In one example, the controller 22 may be communicatively coupled with a gas capture optimizer system 66. In certain embodiments, the gas capture optimizer 66 may be integrated into the controller 22 (e.g., processor 120). In certain embodiments, the controller 22, the gas capture optimizer 66, and/or the one or more sensors 128 of the industrial plant 10 may interface (e.g., input devices) with the carbon capture system 100 as shown in FIG. 2. In some embodiments, the controller 22 and/or the gas capture optimizer 66 may interface with one or more sensors 128 positioned within the gas capture system 20 (e.g., carbon capture system 100). In some embodiments, the controller 22 and/or the gas capture optimizer 66 may monitor the gas capture system (e.g., carbon capture system 100). Accordingly, the controller 22 and/or the gas capture optimizer 66 may adjust parameters of the carbon of the gas capture system 20 (e.g., carbon capture system 100) by controlling operation automatically in response to sensor feedback and/or operating parameters, in response to user/operator input or selections, or any combination thereof.

By way of example, FIG. 2 is a schematic of an embodiment of the gas capture system 20 (e.g., carbon capture system 100) of FIG. 1, further illustrating an adsorption stage 202, a desorption stage 204, and a cooling stage 206, each having a contactor or adsorber 208 with a sorbent material 210 (e.g., 220, 222, 224) coupled to a heat exchanger 212 (e.g., 214, 216, 218). In certain embodiments, the gas capture system 20 is designed as a temperature swing adsorption (TSA) system, a pressure swing adsorption system, a humidity swing adsorption system or a combination thereof. For example, the gas capture system 20 may use temperature, pressure, and/or humidity swings or changes to transition between the stages 202, 204, and 206. The heat exchangers 212 (e.g., 214, 216, 218) may be controlled to remove or add heat relative to the sorbent materials 210 (e.g., 220, 222, 224) during transitions between operational stages of the gas capture system 20. The sorbent materials 210 (e.g., 220, 222, 224) are configured to adsorb or desorb gases in the adsorption and desorption stages 202 and 204, respectively.

In the illustrated embodiment, the gas capture system 20 has a plurality of contactors or adsorbers 208 with the sorbent materials 210 (e.g., 220, 222, 224) coupled to the heat exchangers 212 (e.g., 214, 216, 218) operating in parallel (e.g., simultaneously) with one another in different stages 202, 204, and 206. For example, the adsorber 208 having the heat exchanger 214 and sorbent material 220 is operating in the adsorption stage 202, the adsorber 208 having the heat exchanger 216 and sorbent material 222 is operating in the desorption stage 204, and the adsorber 208 having the heat exchanger 218 and the sorbent material 224 is operating in the cooling stage 206. As discussed in detail below, the controller 22 having the gas capture optimizer 66 is configured to control various operating parameters (e.g., temperature, pressure, humidity, cycle time, power consumption, etc.) for each of the different stages 202, 204, and 206, including the transition of each adsorber 208 in a sequence of the stages: (1) adsorption stage 202, (2) desorption stage 204, and (3) cooling stage 206. Thus, each of the adsorbers 208 progressively operates for a duration of time (or cycle) in each of the stages 202, 204, and 206. In certain embodiments, the gas capture system 20 may include 3, 4, 5, 6, 7, 8, 9, 10, or more adsorbers 208 operating in parallel (e.g., simultaneously) with at least one or more of the adsorbers 208 operating in each of the stages 202, 204, and 206 at all times, such that the adsorbers 208 are operating in a staggered manner in the stages 202, 204, and 206.

The gas capture system 20 may additionally include other equipment upstream, within, and/or downstream from the stages 202, 204, and 206. For example, the gas capture system 20 may include one or more sensors 226 (e.g., sensors 128 of FIG.1), designated as (S), positioned throughout the gas capture system 20. The one or more sensors 226 (e.g., temperature sensors, pressure sensors, humidity sensors, flow rate sensors, gas composition sensors, or any combination thereof) may measure parameters associated with the gas capture system 20. The sensors 226 may be used for control of the gas capture system 20, and particularly operating parameters (e.g., temperature, pressure, humidity, cycle time, power consumption, etc.) of the stages 202, 204, and 206. The gas capture system 20 may also include a vacuum pump 228 that may be disposed downstream from the desorption stage 204. The vacuum pump 228 may create a vacuum in the desorption stage 204 (e.g., in the heat exchanger 216) to remove water and gases from the desorption stage 204.

The gas capture system 20 may also include a fluid transfer system 229. The fluid transfer system 229 may be used to provide one or more fluids to the heat exchangers 212 (e.g., 214, 216, 218) for indirect heat transfer. The fluid transfer system 229 may include a cooling source 230, 232 and a heating source 234. One or more valves may control a flow of the fluids from the cooling source 230, 232 and the heating source 234 to the heat exchangers 212 (e.g., 214, 216, 218). The cooling source 230, 232 and the heating source 234 may include one or more fluid tanks, fluid pumps or compressors, valves, conduits, waste heat sources, water sources, steam sources, inert gas sources (e.g., nitrogen), heat exchangers, heaters, coolers, or any combination thereof. For example, the cooling source 230, 232 may include a cooling water, a refrigerant of a refrigerant cycle, a cooling gas (e.g., inert gas), or any combination thereof, being supplied from other parts of the industrial plant 10 and/or a cooling system. By further example, the heating source 234 may include a heating water, a steam, a heating gas (e.g., inert gas), a heating oil, or any combination thereof, being supplied from other parts of the industrial plant 10 and/or a heating system. For example, the heating source 234 may include heating water and/or steam from the steam turbine system 14 and/or the HRSG 16 as discussed above.

The adsorption stage 202 of the gas capture system 20 may be used to capture undesired gases (e.g., CO₂). For example, the adsorption stage 202 may receive an untreated gas 236 (e.g., untreated exhaust gas 62 and/or air 64) from an untreated gas supply (e.g., gas turbine system 12, HRSG 16, the atmosphere, direct air capture system or interior of buildings), adsorb undesirable gases (e.g., CO₂) from the untreated gas into a sorbent material, and discharge a treated gas 238 (e.g., treated exhaust gas and/or treated air) with substantially less of the undesirable gases through a treated gas exhaust (e.g., exhaust stack). During the adsorption stage 202, cold fluid from the cooling source 230 of the fluid transfer system 229 may be present in and/or circulated through a heat exchanger 214. For example, the cooling source 230 may supply and/or circulate a cooling fluid via the heat exchanger 214 for indirect heat transfer (e.g., cooling) of the sorbent material 220 as indicated by arrow 231. The cooling fluid may include a liquid or gas (e.g., cooled water, refrigerant, oil, gas, etc.). In certain embodiments, the adsorption of undesirable gases into the sorbent material is an exothermic process, which causes an increase in temperature of the sorbent material. Accordingly, the cold fluid present during the adsorption stage 202 may be used to maintain a temperature of the untreated gas 236 and/or the sorbent material 220 below a threshold temperature for adsorption. The sorbent material may generally have reduced adsorption efficiency and/or capacity as the temperature increases, whereas the sorbent material may generally have increased adsorption efficiency and/or capacity as the temperature decreases.

In certain embodiments, the temperature of the untreated gas 236 and/or the sorbent material 220 may be controlled to be approximately 30 degrees Celsius or within a range of 20 to 40 degrees Celsius during the adsorption stage 202. However, the temperatures may vary depending on the particular untreated gas 236, sorbent material, undesirable gas, cooling systems, and other aspects of the gas capture system 20. It should be noted that in some embodiments, the cooling source 230 may be initiated to maintain a certain temperature or temperature range (e.g., between upper and lower temperature thresholds) within the heat exchanger 214 during the adsorption stage 202. Once the sorbent material 220 is saturated with the undesirable gas (e.g., CO₂), the gas capture system 20 may change an operating stage from the adsorption stage 202 to the desorption stage 204.

The desorption stage 204 may be initiated to desorb the undesirable gas from the sorbent material 222. Desorption may be initiated upon heating of the sorbent material 222 within the heat exchanger 216. As such, the gas capture system 20 may flow fluid from the heating source 234 of the fluid transfer system 229 to the heat exchanger 216. For example, the heating source 234 may supply and/or circulate a heating fluid directly through the heat exchanger 216 via indirect heat transfer (e.g., heating) of the sorbent material 222 as indicated by arrow 233. The indirect heat transfer may heat up the sorbent material 222 to a sufficient temperature range to cause desorption of the undesirable gases (e.g., CO₂) from the sorbent material 222. The heating fluid may include a liquid or gas (e.g., heated water, oil, steam, gas, etc.). The sorbent material may generally have increased desorption efficiency as the temperature increases, whereas the sorbent material may generally have decreased desorption efficiency as the temperature decreases.

In some embodiments, the heating source 234 is controlled to provide heating fluid (e.g., 233) to the heat exchanger 216 within a temperature range of 100 to 150 degrees Celsius, such that the sorbent material 222 heats up to a temperature range of 100 to 150 degrees Celsius. This allows undesirable gases (e.g., CO₂) previously adsorbed into the sorbent material 222 to be desorbed from the sorbent material 222 and output from the heat exchanger 216. Additionally, the vacuum pump 228 may be in direct communication with both the heat exchanger 216 and the separator 242, wherein the separator 242 may be positioned downstream from the vacuum pump 228. In this way, the separator 242 may separate gases from any moisture (e.g., water (H₂O)) in the extracted fluid, thereby outputting undesirable gases as captured gas 248 and the moisture as captured water 246. Thus, the vacuum pump 228 and the separator 242 operate to draw out the extracted fluid and separate the undesirable gases (e.g., CO₂) from the steam/water. Once the sorbent material 222 has released the undesirable gases beyond a threshold, the gas capture system 20 may change the operating stage from the desorption stage 204 to the cooling stage 206.

The cooling stage 206 may be initiated to cool the heat exchanger 218 between the desorption stage 204 and the adsorption stage 202 (e.g., an additional adsorption stage), such that the sorbent material 224 is within a desired temperature range (e.g., within upper and lower temperature thresholds). The cooling stage 206 may be initiated by controlling the cooling source 232 of the fluid transfer system 229 to provide cold fluid to the heat exchanger 218. The cold fluid may reduce a temperature of the heat exchanger 218 and sorbent material 224 to meet a desired temperature to initiate an additional adsorption stage. In certain embodiments, the cooling source 232 may supply and/or circulate a cooling fluid indirectly through the heat exchanger 218 for indirect heat transfer (e.g., cooling) of the sorbent material 224 as indicated by arrow 235. For indirect heat transfer via a fluid flow indicated by arrow 235, the cooling fluid may include a liquid or gas (e.g., cooled water, oil, refrigerant, gas, etc.). In certain embodiments, the cooling stage 206 may be omitted. For example, the heat exchangers 212 may be cooled via a fluid passed through the sorbent material 210.

The one or more sensors 226 may be positioned through various parts of the adsorption stage 202, the desorption stage 204, and the cooling stage 206. For example, the one or more sensors 226 may be disposed near and/or within the untreated gas 236 and provide sensor feedback and/or measurements associated with temperature, pressure, flow rate, gas composition (e.g., % of inlet CO₂, % of inlet H₂O), air inlet condition, inlet gas flow, or any combination thereof. The one or more sensors 226 may also monitor temperature fluctuations with respect to the fluid transfer system 229 (e.g., cooling source 230, 232 and heating source 234), thereby providing temperature feedback associated with the fluids. In another example, the one or more sensors 226 may be positioned near and/or within the heat exchangers 212 (e.g., 214, 216, 218) to provide sensor feedback (e.g., temperature, pressure, humidity, flow rate, fluid composition, etc.) relating to the undesirable gas (e.g., CO₂) being adsorbed by and desorbed from the sorbent materials 210 (e.g., 220, 222, 224). In another example, the one or more sensors 226 may be positioned near, within, and/or in contact with the sorbent materials 210 (e.g., 220, 222, 224), thereby providing sensor feedback (e.g., temperature) relating to the sorbent materials 210 (e.g., 220, 222, 224). In certain embodiments, the one or more sensors 226 may monitor parameters (e.g., temperature, pressure, humidity, flow rate, gas composition, sorbent utilization, vacuum condition, power consumption) of the heat exchangers 212 (e.g., 214, 216, 218), sorbent material 210 (e.g., 220, 222, 224), untreated gas, or a combination thereof. The one or more sensors 226 may be disposed near and/or within the treated gas 238 or vacuum pump 228 and provide sensor feedback and/or measurements associated with temperature, pressure, humidity, flow rate, gas composition (e.g., % of outlet CO₂, % of outlet H₂O), air inlet condition, inlet gas flow, vacuum condition, power consumption, or any combination thereof. In some embodiments, additional sensors may be present near and/or within the separator 242, a component receiving captured water 246, and a component receiving captured gas 248. In this way, the gas capture optimizer 66 may utilize the sensor feedback provided by the one or more sensors 226 to adjust parameters of the gas capture system 20 (e.g., carbon capture system 100), thereby improving energetics of the gas treatment system.

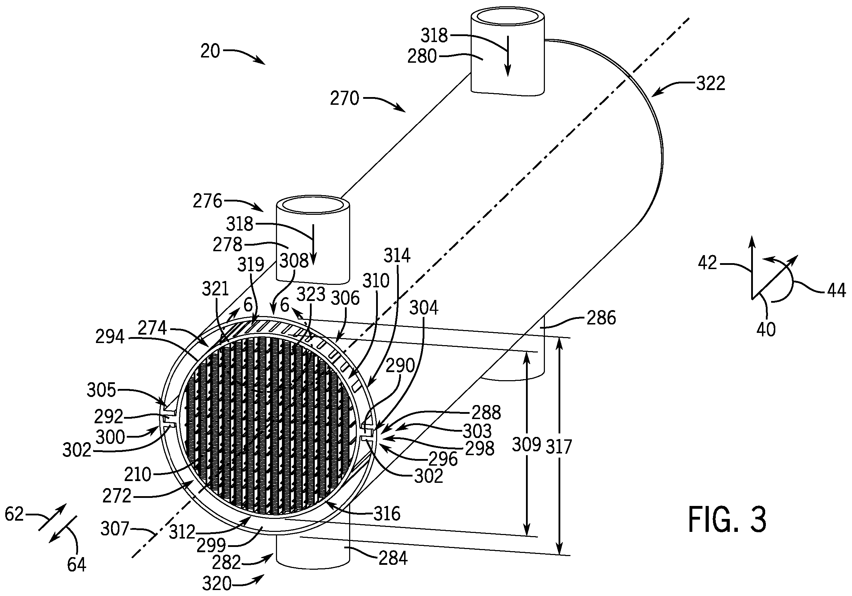

FIG. 3 is a perspective view of an embodiment of the gas capture system 20 (e.g., sorbent-based gas capture system) of FIGS. 1 and 2, further illustrating an embodiment of the adsorber 208 having the sorbent material 210 coupled to the heat exchanger 212. In the illustrated embodiment, the gas capture system 20 includes an outer shell 270 (e.g., annular outer shell or water jacket) and a heat exchanger 272 (e.g., cartridge) disposed in an interior 274 of the outer shell 270. For purposes of discussion, an axial end of the adsorber 208 is open to illustrate internal features of the heat exchanger 272 within the outer shell 270. As discussed below, the outer shell 270 is configured to hold a fluid (e.g., fluid flow 318) rather than a vacuum around the heat exchanger 272, whereas the heat exchanger 272 itself can internally hold a vacuum. The gas capture system 20 also includes a plurality of inlet conduits 276 (e.g., radial inlet conduits 278, 280) and a plurality of outlet conduits 282 (e.g., radial outlet conduits 284, 286) coupled (e.g., directly coupled, fluidly coupled) to the outer shell 270. In the illustrated embodiment, the gas capture system 20 includes two inlet conduits 276 and two outlet conduits 282. In certain embodiments, the gas capture system 20 may include fewer or more than two inlet conduits 276 and/or outlet conduits 282. For example, the gas capture system 20 may include 1, 3, 4, 5, 6, or more inlet conduits 276 and/or outlet conduits 282.

In the illustrated embodiment, the heat exchanger 272 includes a plurality of protrusions 288 (e.g., protrusions 290, 292) extending radially outward from an outer surface 294 (e.g., outer annular surface) of the heat exchanger 272. As shown, the outer shell 270 includes a plurality of arm pairs 296 (e.g., arm pairs 298, 300) that extend radially inward from an inner surface 299 (e.g., inner annular surface) of the outer shell 270. Each arm pair 296 includes two arms 302 that extend radially inward from the inner surface 299 and extend axially along the axial direction 40. The arm pairs 296 form a plurality of channels 303 (e.g., axial channels 304, 305) disposed between each arm pair 296. In certain embodiment, each arm pair 296 defines a first rail structure (e.g., female rail structure) having the channel 303, while the protrusions define a second rail structure (e.g., male rail structure). As shown, the heat exchanger 272 couples to the outer shell 270 based on the channels 303 receiving the protrusions 288. In the illustrated embodiment, the heat exchanger 272 includes two protrusions 288 and two channels 303. In certain embodiments, the heat exchanger 272 may include more than two protrusions 288 and/or the outer shell 270 may include more than two channels 303. For example, the heat exchanger 272 may include 3, 4, 5, 6, or protrusions 288 and/or the outer shell 270 may include 3, 4, 5, 6, or more channels 303. In certain embodiments, the protrusions 288 and the channels 303 may be interchanged. For example, the protrusions 288 may extend inward from the inner surface 299 of the outer shell 270 and the arm pairs 296 may extend outward from the outer surface 294 of the heat exchanger 272.

In the illustrated embodiment, the outer shell 270 and the heat exchanger 272 are cylindrical in shape. As shown, the heat exchanger 272 is concentrically aligned within the outer shell 270, such that the outer shell 270 and the heat exchanger 272 share a common central axis 307. In the illustrated embodiment, an outer diameter 309 of the heat exchanger 272 is less than an inner diameter 311 of the outer shell 270. In certain embodiments, a ratio between the outer diameter 309 of the heat exchanger 272 and the inner diameter 311 of the outer shell 270 may be between 2:3 and 7:8. In certain embodiments, the outer shell 270 and/or the heat exchanger 272 may be another shape (e.g., rectangular prism, triangular prism, hexagonal prism, etc.).

In the illustrated embodiment, the heat exchanger 272 includes a plurality of fluid passages 306 and a plurality of gas passages 308. The plurality of fluid passages 306 extend from first portion 310 of the outer surface 294 (e.g., first outer surface) of the heat exchanger 272 to a second portion 312 of the outer surface 294 (e.g., second outer surface) of the heat exchanger 272, such that the plurality of fluid passages 306 extend from a first half portion 314 (e.g., first semicylinder portion) of the heat exchanger 272 to a second half portion 316 (e.g., second semicylinder portion) of the heat exchanger 272. As shown, a fluid flow 318 (e.g., liquid flow, gas flow) flows into the interior 274 of the heat exchanger 272 via the plurality of inlet conduits 276. In certain embodiments, the fluid flow 318 may include water, steam, oil, heated gas, and/or a water-steam mixture. As shown, the plurality of fluid passages 306 receive the fluid flow 318 from the interior 274 of the heat exchanger 272 through a plurality of openings 319 formed through an outer wall 321 of the heat exchanger 272. The fluid flow 318 passes through the plurality of fluid passages 306 and is expelled through the plurality of outlet conduits 282. In the illustrated embodiment, the fluid passages 306 are parallel with one another. In certain embodiments, the fluid passages 306 may be skewed relative to one another. The fluid flow 318 may include a heat transfer or thermal fluid, such as water, steam, one or more water treatments (e.g., antifreeze, corrosion inhibitors, pH control, etc.), or a combination thereof. The fluid flow 318 may be a hot or heated fluid during the desorption stage 204, whereas the fluid flow 318 may be a cold or cooled fluid during the adsorption stage 202 and the cooling stage 206. The heat exchanger 272 is generally surrounded by the fluid flow 318 contained by the outer shell 270 (e.g., outermost vessel or container), such that the heat exchanger 272 is surrounded by the fluid flow 318 rather than a vacuum chamber.

The plurality of gas passages 308 extend through the heat exchanger 272 crosswise (e.g., perpendicular) to the plurality of fluid passages 306, wherein the gas passages 308 are fluidly sealed and isolated from the fluid passages 306. During the adsorption stage 202, the plurality of gas passages 308 are configured to receive the untreated gas 236 (e.g., air 64 and/or exhaust gas 62). During the desorption stage 204 and the cooling stage 206, the plurality of gas passages 308 may receive a sweep fluid flow and/or a vacuum to assist with the desorption and/or cooling of the sorbent material 210. For example, the sweep fluid flow may include an inert gas (e.g., nitrogen), carbon dioxide, steam, or any combination thereof. By further example, the vacuum pump 228 may be configured to create and hold a vacuum in the plurality of gas passages 308 of the heat exchanger 272. In this manner, the plurality of gas passages 308 may define internal vacuum chambers and/or passages integrally formed within the heat exchanger 272. Again, the adsorber 208 may exclude any external vacuum chambers, such as formed between the outer shell 270 and the heat exchanger 272.

As shown, the plurality of gas passages 308 extend from a first side 320 (e.g., first axial side) of the heat exchanger 272 to a second side 322 (e.g., second axial side) of the heat exchanger 272. The plurality of gas passages 308 receive the air 64 and/or exhaust gas 62 from the first side 320 and expel the air 64 and/or exhaust gas 62 from the second side 322. In certain embodiments, the first side 320 and the second side 322 may be parallel and/or opposing sides of the heat exchanger 272. In the illustrated embodiment, the gas passages 308 are parallel with one another. In certain embodiments, the gas passages 308 may be skewed relative to one another. As shown, one or more surfaces 323 of the plurality of gas passages 308 are coated with the sorbent material 210, which is configured to remove one or more undesirable gases from the air 64 and/or exhaust gas 62 during the adsorption stage 202 and release the undesirable gases during the desorption stage 204. The heat exchanger 272 is configured to place the fluid flow 318 in an indirect heat exchange relationship with the sorbent material 210 and the air 64 and/or exhaust gas 62 (e.g., gas flow) during the stages 202, 204, and 206 discussed in FIG. 2.

In certain embodiments, the heat exchanger 272 may include a single piece or multiple pieces of thermally conductive material (e.g., aluminum, copper, etc.). In certain embodiments, the heat exchanger 272 may be formed by extruding a metal through a die to form the plurality of fluid passages 306 and the plurality of gas passages 308 of the heat exchanger 272. By further example, the heat exchanger 272 may be formed via an additive manufacturing technique (e.g., three dimensional (3D) printing). Additionally, the sorbent material 210 may be applied to the one or more surfaces 323 of the plurality of gas passages 308 via one or more coating procedures (e.g., spraying, dipping, flow coating, etc.). Additionally or alternatively, the plurality of openings 319 (e.g., holes) may be machined (e.g., milled, drilled, cut, etc.) into the outer wall 321 of the heat exchanger 272, such that the plurality of openings 319 extend from the outer surface 294 of the heat exchanger 272 to the plurality of fluid passages 306. In certain embodiments, using extrusion for manufacturing, the heat exchanger 272 may have a uniform cross-section extending axially along the central axis 307. In other embodiments, using a rotational extrusion manufacturing process, the heat exchanger 272 may have a cross-section that changes or rotates extending axially along the central axis 307.

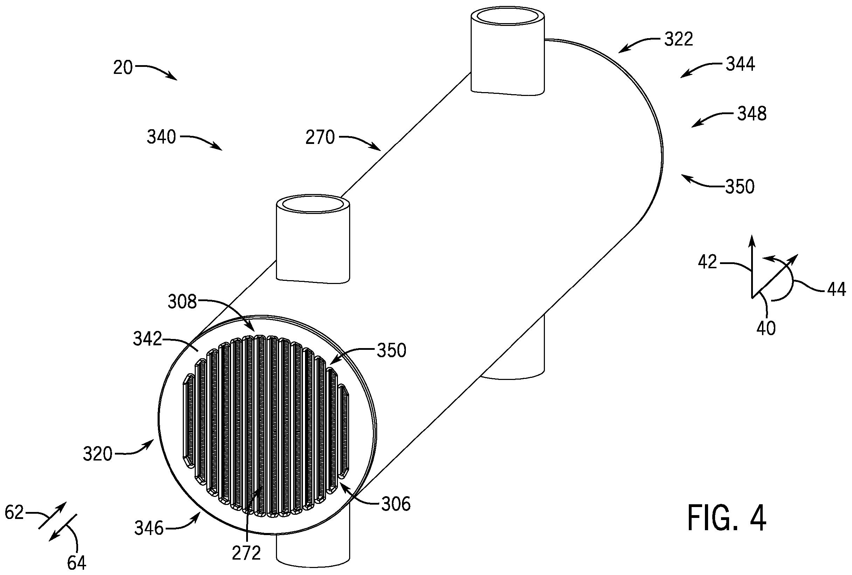

FIG. 4 is a perspective view of an embodiment of the gas capture system 20 of FIG. 3, further illustrating the adsorber 208 having end plates 340 (e.g., end plates 342, 344) coupled to opposite axial ends (e.g., sides 346, 348) of the outer shell 270 and opposite axial ends (e.g., sides 320, 322) the heat exchanger 272. In the illustrated embodiment, the end plate 342 is coupled to a first side 346 of the outer shell 270 and the first side 320 of the heat exchanger 272. Additionally or alternatively, the end plate 344 is coupled to a second side 348 of the outer shell 270 and the second side 322 of the heat exchanger 272. As discussed below, the end plates 340 close off (e.g., terminate) and seal all liquid chambers or passages (e.g., the plurality of fluid passages 306) at the axial ends of the adsorber 208, while enabling gas flow through the plurality of gas passages 308.

In the illustrated embodiment, each of the end plates 340 includes a plurality of first apertures 350 (e.g., holes, slots) formed through the end plates 340. As shown, the first apertures 350 align with the plurality of gas passages 308, such that the untreated gas 236 (e.g., air 64 and/or exhaust gas 62), a sweep gas, or vacuum may flow through the first apertures 350 and into the plurality of gas passages 308. Additionally, as shown, the end plates 340 cover the plurality of fluid passages 306, thereby blocking the liquid from escaping through the first side 320 and/or the second side 322 of the heat exchanger 272. In certain embodiments, the end plates 340 may be coupled to the outer shell 270 and/or the heat exchanger 272 via one or more fasteners (e.g., removable or fixed fasteners) and/or a seal to mitigate the flow of the liquid through the first side 320 and/or the second side 322 of the heat exchanger 272. The removable fasteners may include threaded fasteners, clamps, straps, elastic bands, or any combination thereof. The fixed fasteners may include adhesive bonded, welded joints and/or brazed joints. The seals may include a gasket having the same or similar form as the end plates 340, a sealant (e.g., adhesive sealant), or any combination thereof.

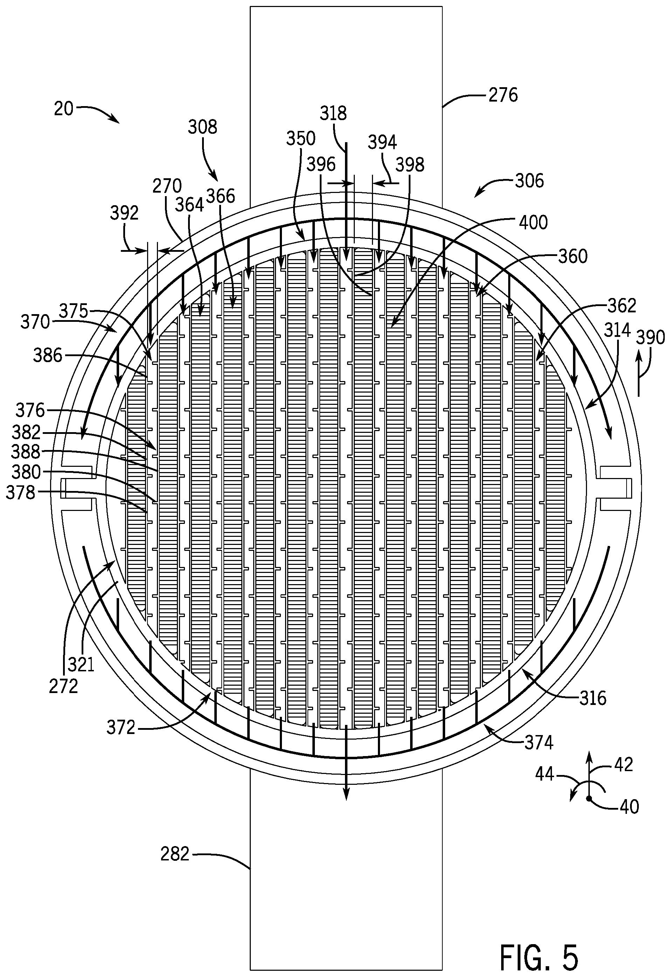

FIG. 5 is a cross-sectional view of an embodiment of the gas capture system 20 of FIGS. 3 and 4, further illustrating internal flow paths and heat transfer features of the adsorber 208 at an open end as shown in FIG. 3. In the illustrated embodiment, the heat exchanger 272 is concentrically aligned with the outer shell 270 of the adsorber 208. As shown, the heat exchanger 272 includes the plurality of fluid passages 306 (e.g., liquid passage 360, 362) and the plurality of gas passages 308 (e.g., gas passage 364, 366). In the illustrated embodiment, the plurality of fluid passages 306 alternate with the plurality of gas passages 308. In certain embodiments, the plurality of fluid passages 306 and the plurality of gas passages 308 may be arranged in a different arrangement.

In the illustrated embodiment, the inlet conduit 276 transfers the fluid flow 318 to a first chamber 370 (e.g., C-shaped or semi-annular chamber) disposed between the outer shell 270 and the first half portion 314 of the heat exchanger 272. The fluid flow 318 travels from the first chamber 370 through the first apertures 350 into the fluid passages 306. The fluid flow 318 exits the fluid passages 306 through second apertures 372 formed through the outer wall 321 of the heat exchanger 272 into a second chamber 374 (e.g., C-shaped or semi-annular chamber) disposed between the second half portion 316 of the heat exchanger 272 and the outer shell 270. The fluid flow 318 flows from the second chamber 374 into the outlet conduit 282 and away from the gas capture system 20.

In the illustrated embodiment, each fluid passage 306 (e.g., liquid passage 375) includes one or more protrusions 376 (e.g., first protrusion 378, second protrusion 380, third protrusion 382) extending outward (e.g., crosswise) from inner surfaces 384 (e.g., surfaces 386, 388) of the liquid passage 306. The protrusions 376 may extend axially along the central axis 307 (e.g., axial protrusions) formed by extrusion during manufacturing. The protrusions 376 also may be described as turbulators due to their functionality in inducing turbulent flow. The protrusions 376 also may increase heat transfer due to the increased surface area along the fluid passages 306. Thus, the protrusions 376 may be described as fins, such as heat transfer fins. The one or more protrusions 376 may be configured to induce a turbulence onto the fluid flow 318 as it passes through the liquid passage 306, thereby increasing the efficiency of the heat exchanger 272. As shown, the protrusions 376 are staggered (e.g., alternate) between the two inner surfaces 384 of each liquid passage 306. For example, travelling along a vertical direction 390, the first protrusion 378 extends from the surface 386 of the liquid passage 375, the second protrusion 380 extends from the surface 388 of the liquid passage 375, and the third protrusion 382 extends from the surface 386. As shown, this alternating pattern continues along the remaining extent of each liquid passage 306. In certain embodiments, the protrusions 376 may be arranged in a different (e.g., non-alternating) arrangement. Additionally or alternatively, in certain embodiments, the protrusions 376 may include a non-rectangular or polygonal cross-sectional shape (circular, triangular, serrated, diamond, trapezoidal, etc.) or may be omitted from one or more of the fluid passages 306.

In the illustrated embodiment, a cross-sectional area and width 392 of an individual fluid passage 306 is less than a cross-sectional area and width 394 of an individual gas passage 308. As shown, the width 392 extends between inner surfaces 386 and 388 of the liquid passage, and the width 394 extends between a first inner surface 396 and a second inner surface 398 of the gas passage 308. In certain embodiments, a ratio between the width 392 of the liquid passage 306 and the width 394 of the gas passage is between 1:3 and 7:8. In certain embodiments, the width 392 of the liquid passage 306 may be greater than the width 394 of the gas passage 308. In certain embodiments, a ratio of surface area to volume of a gas passage 308 may range from 8:*x* to 10:*x*, where *x* is the width 394 of the gas passage 308. That is, as the width 394 decreases, the ratio of the surface area of the gas passage 308 per unit volume increases, resulting in greater carbon capture efficiency due to increased exposure of the exhaust gas 62 with the sorbent material 210 disposed on surfaces 400 of the gas passages 308.

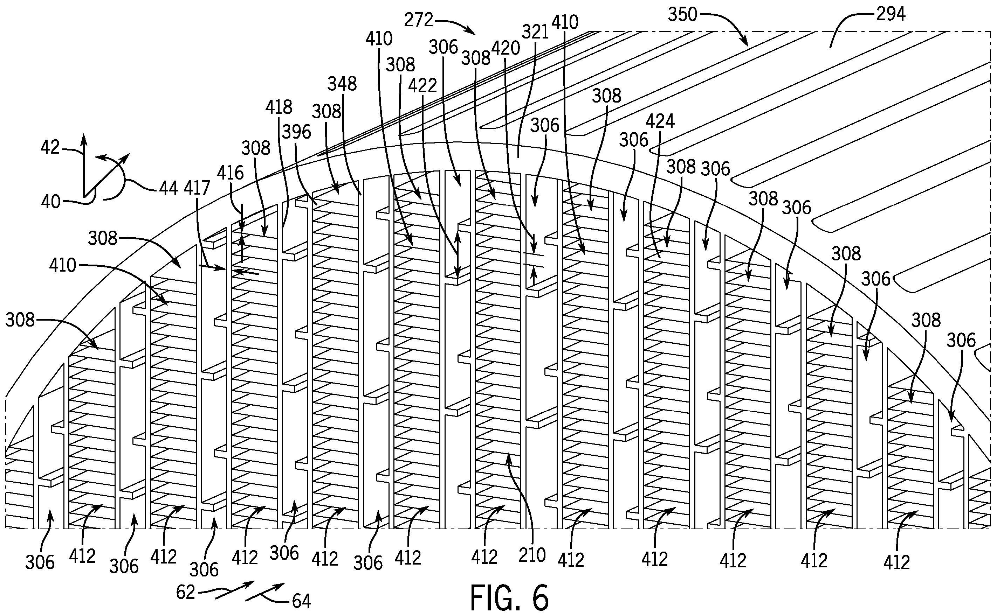

FIG. 6 is a close-up view of an area 6-6 in FIG. 3, further illustrating internal flow paths and heat transfer features of the adsorber 208 at an open end as shown in FIG. 3. In particular, FIG. 6 further illustrates a plurality of fins 410 disposed in the plurality of gas passages 308. In the illustrated embodiment, the fins 410 extend crosswise from the first inner surface 396 of each gas passage 308 to the second inner surface 398 of each gas passage 308, thereby dividing each gas passage 308 into channels 412. As shown, a thickness 416 of the fins 410 is less than a thickness 417 of walls 418 separating the gas passages 308 from the fluid passages 306, and the thickness 416 of the fins 410 is less than a thickness of the protrusions 376. Additionally, a spacing 420 between subsequent fins 410 is less than a spacing 422 between subsequent protrusions 376 in the fluid passages 306. In certain embodiments, a ratio between the spacing 420 between subsequent fins 410 and the spacing 422 between subsequent protrusions 376 is less than 1:3, 1:4, or 1:5. The fins 410 may extend along an axial length of the heat exchanger 272. In certain embodiments, the walls 418, the protrusions 376, the fins 410, the fluid passages 306, and the gas passages 308 may be manufactured via an extrusion process (e.g., extrusion along central axis 307) when forming the heat exchanger 272. One or more surfaces 424 of the fins 410 and the walls 418 along the gas passages 308 may be coated with the sorbent material 210. For example, an entirely of all surfaces within the gas passages 308 may be coated with the sorbent material 210. In certain embodiments, the fins 410 may be omitted from one or more of the gas passages 308, while the sorbent material 210 covers an entirely of all surfaces of the walls 418 within the gas passages 308. It may be appreciated that the fins 410 increase a surface area of the gas passages 308 and the sorbent material 210, thereby enabling more of the one or more undesirable gases to be adsorbed into the sorbent material 210 as the untreated gas 236 (e.g., air 64 and/or exhaust gas 62) travels through the gas passages 308 during the adsorption stage 202. In certain embodiments, the fins 410 may include microchannels, grooves or other surface features (not shown) that further increase surface area of the gas passages 308. Additionally, the small cross sectional area of the channels 412 enables the gas passages 308 to easily retain a vacuum during the desorption and cooling stages 204 and 206, thereby eliminating the need for a separate vacuum chamber. In certain embodiment, the sorbent material 210 may be coated onto surfaces of the gas passages 308 after extrusion of the heat exchanger 272, such as by a dipping process, a spray coating process, a flow coating process or any combination thereof.

In the illustrated embodiment, the heat exchanger 272 includes the plurality of first apertures 350 formed through the outer wall 321 of the heat exchanger 272. The first apertures 350 extend from the outer surface 294 to the plurality of fluid passages 306. As discussed herein, the first apertures 350 may be machined (e.g., drilled, milled, cut, etc.) into the wall 321 after the heat exchanger 272 is extruded.

Technical effects of the disclosed embodiments include a modular heat exchanger that can be manufactured via extrusion or additive manufacturing, thereby decreasing manufacturing costs and improving scalability. The proximity of alternating fluid and gas passages increases the efficiency of the heat exchanger. The efficiency of the heat exchanger is also increased by using protrusions in the fluid passages to induce turbulence onto the liquid flow. Additional advantages include an increase in the amount of undesirable gas removed due to the fins with sorbent material disposed in the gas passages. Furthermore, the small cross-sectional area of the channels of the gas passages (e.g., between the fins) enables the gas passages to retain a vacuum, thereby eliminating the need for a dedicated vacuum chamber during cycles of desorption, adsorption, and cooling.

The subject matter described in detail above may be defined by one or more clauses, as set forth below.

According to a first aspect, a system includes a sorbent-based gas capture system configured to capture an undesirable gas from a gas flow. The sorbent-based gas capture system includes one or more adsorbers. The one or more adsorbers include a heat exchanger. The heat exchanger includes a plurality of fluid passages extending through the heat exchanger. The plurality of fluid passages is configured to receive a fluid flow. The heat exchanger also includes a plurality of gas passages extending through the heat exchanger. The plurality of gas passages is configured to receive the gas flow having the undesirable gas during an adsorption stage. The heat exchanger also includes a sorbent material disposed on one or more surfaces of the plurality of gas passages. The sorbent material is configured to remove the undesirable gas from the gas flow during the adsorption stage. The one or more adsorbers also include an outer shell disposed about the heat exchanger. The one or more adsorbers also include a fluid chamber disposed about the heat exchanger between the heat exchanger and the outer shell. The plurality of fluid passages is coupled to the fluid chamber.

The system of the preceding clause, wherein the heat exchanger includes a one-piece body having a cross-section that is substantially uniform along a central axis, the plurality of fluid passages extend axially along the central axis, the plurality of gas passages extend axially along the central axis, and the one-piece body includes a plurality of walls extending axially along the central axis and separating the plurality fluid passages from the plurality of gas passages.

The system of any preceding clause, wherein the one-piece extrusion includes: one or more fluid inlets between a first chamber portion of the fluid chamber and the plurality of fluid passages; one or more fluid outlets between a second chamber portion of the fluid chamber and the plurality of fluid passages, wherein the plurality of fluid passages are configured to direct the fluid flow in a first direction between the one or more fluid inlets and the one or more fluid outlets; one or more gas inlets into the plurality of gas passages, and one or more gas outlets out of the plurality of gas passages, wherein the plurality of gas passages are configured to direct the gas flow in a second direction between the one or more gas inlets and the one or more gas outlets, and the first and second directions are crosswise to one another.

The system of any preceding clause, including first and second end plates disposed over opposite first and second axial ends of the heat exchanger, wherein each of the first and second end plates covers and seals the fluid chamber and the plurality of fluid passages, the first end plate includes inlet openings fluidly coupled with the one or more gas inlets, and the second end plate outlet includes openings fluidly coupled with the one more gas outlets.

The system of any preceding clause, wherein the plurality of gas passages is configured to: receive the gas flow from a first side of the heat exchanger; and expel the gas flow from a second side of the heat exchanger.

The system of any preceding clause, wherein the first side and the second side include opposing sides of the heat exchanger.

The system of any preceding clause, wherein the outer shell and the heat exchanger are cylindrical in shape and concentrically aligned.

The system of any preceding clause, wherein the first side includes a first axial end of the heat exchanger, and the second side includes a second axial end of the heat exchanger.

The system of any preceding clause, wherein the plurality of fluid passages extends from a first outer surface of a first semicylinder portion of the heat exchanger to a second outer surface of a second semicylinder portion of the heat exchanger, and the plurality of fluid passages are parallel to one another.

The system of any preceding clause, wherein at least one gas passage of the plurality of gas passages extends from the first axial end to the second axial end, and the plurality of gas passages are parallel to one another.

The system of any preceding clause, wherein at least one fluid passage of the plurality of fluid passages includes one or more protrusions extending from one or more surfaces of the at least one fluid passage, wherein the one or more protrusions are configured to induce turbulence in the fluid flow.

The system of any preceding clause, wherein at least one gas passage of the plurality of gas passages includes a plurality of fins, and the sorbent material is disposed on the plurality of fins.

The system of any preceding clause, wherein the plurality of fluid passages alternate with the plurality of gas passages.

The system of any preceding clause, wherein the sorbent-based gas capture system includes a vacuum coupled to the plurality of gas passages, wherein the vacuum is configured to create a vacuum pressure within the plurality of gas passages during the desorption stage.

According to a second aspect, a system includes a heat exchanger of an adsorber of a sorbent-based gas capture system configured to capture an undesirable gas from a gas flow. The heat exchanger includes a one-piece body. The heat exchanger also includes a plurality of fluid passages extending through the one-piece body. The plurality of fluid passages is configured to receive a fluid flow. The heat exchanger also includes a plurality of gas passages extending through the one-piece body. The plurality of gas passages is configured to receive a gas flow comprising an undesirable gas during an adsorption stage. The heat exchanger also includes a sorbent material disposed on one or more surfaces of the plurality of gas passages. The sorbent material is configured to remove the undesirable gas from the gas flow during the adsorption stage.

The system of the preceding clause, wherein the one-piece body has a cross-section that is substantially uniform along a central axis, the plurality of fluid passages extend axially along the central axis, the plurality of gas passages extend axially along the central axis, and the one-piece body includes a plurality of walls extending axially along the central axis and separating the plurality fluid passages from the plurality of gas passages.

The system of any preceding clause, including first and second end plates disposed over opposite first and second axial ends of the heat exchanger relative to a central axis, wherein each of the first and second end plates covers and seals the plurality of fluid passages, the first end plate includes inlet openings fluidly coupled with one or more gas inlets into the plurality of gas passages, and the second end plate includes outlet openings fluidly coupled with one more gas outlets out of the plurality of gas passages.

The system of any preceding clause, wherein the one-piece body includes an outer wall extending circumferentially about a central axis, one or more fluid inlets in the outer wall and fluidly coupled to the plurality of fluid passages, and one or more fluid outlets in the outer wall and fluidly coupled to the plurality of fluid passages.

According to a third aspect, a method includes extruding a one-piece body of a heat exchanger for a sorbent-based gas capture system. The heat exchanger includes a plurality of fluid passages extending through the one-piece body and a plurality of gas passages extending through the one-piece body. The method also includes applying a sorbent material to one or more surfaces of the plurality of gas passages. The method also includes forming a plurality of openings into an outer wall of the one-piece body. The plurality of openings includes one or more fluid inlets and one or more fluid outlets fluidly coupled to the plurality of fluid passages.

The method of the preceding clause, including: surrounding the heat exchanger with an outer jacket to define a fluid chamber about the one-piece body of the heat exchanger, wherein the fluid chamber is fluidly coupled to the plurality of fluid passages via the plurality of openings; and coupling the plurality of gas passages to a vacuum configured to create a vacuum pressure within the plurality of gas passages during a desorption stage.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

## Claims

1. A system, comprising:
a sorbent-based gas capture system configured to capture an undesirable gas from a gas flow, wherein the sorbent-based gas capture system comprises one or more adsorbers comprising:
a heat exchanger comprising:
a plurality of fluid passages extending through the heat exchanger, wherein the plurality of fluid passages is configured to receive a fluid flow; and
a plurality of gas passages extending through the heat exchanger, wherein the plurality of gas passages is configured to receive the gas flow comprising the undesirable gas during an adsorption stage;
a sorbent material disposed on one or more surfaces of the plurality of gas passages, wherein the sorbent material is configured to remove the undesirable gas from the gas flow during the adsorption stage;
an outer shell disposed about the heat exchanger; and
a fluid chamber disposed about the heat exchanger between the heat exchanger and the outer shell, wherein the plurality of fluid passages is fluidly coupled to the fluid chamber.

2. The system of claim 1, wherein the heat exchanger comprises a one-piece body having a cross-section that is substantially uniform along a central axis, the plurality of fluid passages extend axially along the central axis, the plurality of gas passages extend axially along the central axis, and the one-piece body comprises a plurality of walls extending axially along the central axis and separating the plurality fluid passages from the plurality of gas passages.

3. The system of claim 2, wherein the one-piece body comprises:
one or more fluid inlets between a first chamber portion of the fluid chamber and the plurality of fluid passages;
one or more fluid outlets between a second chamber portion of the fluid chamber and the plurality of fluid passages, wherein the plurality of fluid passages are configured to direct the fluid flow in a first direction between the one or more fluid inlets and the one or more fluid outlets;
one or more gas inlets into the plurality of gas passages, and
one or more gas outlets out of the plurality of gas passages, wherein the plurality of gas passages are configured to direct the gas flow in a second direction between the one or more gas inlets and the one or more gas outlets, and the first and second directions are crosswise to one another.

4. The system of claim 3, comprising first and second end plates disposed over opposite first and second axial ends of the heat exchanger, wherein each of the first and second end plates covers and seals the fluid chamber and the plurality of fluid passages, the first end plate includes inlet openings fluidly coupled with the one or more gas inlets, and the second end plate outlet includes openings fluidly coupled with the one more gas outlets.

5. The system of claim 1, wherein the plurality of gas passages is configured to:
receive the gas flow from a first side of the heat exchanger; and
expel the gas flow from a second side of the heat exchanger.

6. The system of claim 5, wherein the first side and the second side comprise opposing sides of the heat exchanger.

7. The system of claim 5, wherein the outer shell and the heat exchanger are cylindrical in shape and concentrically aligned.

8. The system of claim 7, wherein the first side comprises a first axial end of the heat exchanger, and the second side comprises a second axial end of the heat exchanger.

9. The system of claim 8, wherein the plurality of fluid passages extends from a first outer surface of a first semicylinder portion of the heat exchanger to a second outer surface of a second semicylinder portion of the heat exchanger, and the plurality of fluid passages are parallel to one another.

10. The system of claim 9, wherein at least one gas passage of the plurality of gas passages extends from the first axial end to the second axial end, and the plurality of gas passages are parallel to one another.

11. The system of claim 9, wherein at least one fluid passage of the plurality of fluid passages comprises one or more protrusions extending from one or more surfaces of the at least one fluid passage, wherein the one or more protrusions are configured to induce turbulence in the fluid flow.

12. The system of claim 10, wherein at least one gas passage of the plurality of gas passages comprises a plurality of fins, and the sorbent material is disposed on the plurality of fins.

13. The system of claim 10, wherein the plurality of fluid passages alternate with the plurality of gas passages.

14. The system of claim 1, wherein the sorbent-based gas capture system comprises a vacuum coupled to the plurality of gas passages, wherein the vacuum is configured to create a vacuum pressure within the plurality of gas passages during the desorption stage.

15. A method, comprising:
extruding a one-piece body of a heat exchanger for a sorbent-based gas capture system, wherein the heat exchanger comprises a plurality of fluid passages extending through the one-piece body and a plurality of gas passages extending through the one-piece body;
applying a sorbent material to one or more surfaces of the plurality of gas passages; and
forming a plurality of openings into an outer wall of the one-piece body, wherein the plurality of openings comprises one or more fluid inlets and one or more fluid outlets fluidly coupled to the plurality of fluid passages.
